# EUROPEAN PATENT APPLICATION

(11) **EP 4 682 797 A1**
(43) Date of publication of application: **21.01.2026**
(21) Application number: 25187800.5
(22) Date of filing: 07.07.2025
(51) Int. Cl.: G06Q 10/20

(54) **AI-BASED MAINTENANCE RECOMMENDATIONS AND GUIDANCE**

(30) Priority: 16.07.2024 US 202418774083
(71) Applicant: Rockwell Automation Technologies, Inc., Mayfield Heights, OH 44124 (US)
(72) Inventor: Bhardwaj, Jiten, Mayfield Heights, OH, 44124 (US); Domakhina, Liudmila, Mayfield Heights, OH, 44124 (US); Esmalifalak, Mohammad, Mayfield Heights, OH, 44124 (US); Gong, Mengsi, Mayfield Heights, OH, 44124 (US); Yu, Min Hua, Mayfield Heights, OH, 44124 (US); Son, Hyo Jung S, Mayfield Heights, OH, 44124 (US); Mistry, Ashish, Mayfield Heights, OH, 44124 (US); Sivakumaran, Chatheersh, Mayfield Heights, OH, 44124 (US); Davoudi, Dorvan, Mayfield Heights, OH, 44124 (US)
(74) Representative: Grünecker Patent- und Rechtsanwälte PartG mbB

(57) **Abstract**

A work order management system leverages generative artificial intelligence (Al) to provide dynamic maintenance guidance to assist with execution of scheduled or reactive maintenance tasks. The work order management system can process technicians' natural language requests for assistance in performing a maintenance task on an industrial asset, and formulate guidance and recommendations based on the nature of the request, knowledge of the asset, learned optimal workflows for successfully performing the task, and other such information. The system can also prompt a generative Al model for supplemental information that can assist in formulating accurate maintenance guidance and recommendations. In some embodiments, the system can also monitor maintenance actions being performed by a technician and provide proactive guidance when the technician's behaviors indicate that assistance with a current maintenance task is required.

## Description

### BACKGROUND

The subject matter disclosed herein relates generally to industrial maintenance, and, more specifically, to industrial work order management and asset maintenance.

### BRIEF DESCRIPTION

The following presents a simplified summary in order to provide a basic understanding of some aspects described herein. This summary is not an extensive overview nor is it intended to identify key/critical elements or to delineate the scope of the various aspects described herein. Its sole purpose is to present some concepts in a simplified form as a prelude to the more detailed description that is presented later.

In one or more embodiments, a system is provided, comprising a memory that stores executable components and work order data defining work orders for maintenance tasks to be performed on industrial assets within an industrial facility, where the executable components comprise a user interface component configured to receive, from a client device, a natural language input describing a request for assistance with a maintenance task, of the maintenance tasks, being performed on an industrial asset; and an analysis component configured to, in response to receipt of the natural language input, formulate guidance data describing instructions for performing the maintenance task based on analysis of the natural language input, industry-specific information encoded in one or more custom models, and a response prompted from a generative artificial intelligence (AI) model, wherein the user interface component is configured to render the guidance data on the client device.

Also, one or more embodiments provide a method, comprising storing, by a system comprising a processor, work orders for maintenance tasks performed within an industrial facility; receiving, by the system, a natural language input from a client device, the natural language input describing a request for assistance with a maintenance task prescribed by a work order, of the work orders, and being performed on an industrial asset; in response to the receiving, formulating, by the system, guidance data describing instructions for performing the maintenance task based on analysis of the natural language input, industry-specific data encoded in one or more custom models, and a response prompted from a generative artificial intelligence (AI) model; and rendering, by the system, the guidance data on the client device.

Also, according to one or more embodiments, a non-transitory computer-readable medium is provided having stored thereon instructions that, in response to execution, cause a system to perform operations, the operations comprising storing work orders for maintenance tasks performed within an industrial facility; receiving a natural language input from a client device, the natural language input describing a request for assistance with a maintenance task prescribed by a work order, of the work orders, and being performed on an industrial asset; in response to the receiving, generating guidance data describing instructions for performing the maintenance task based on analysis of the natural language input, industry-specific data encoded in one or more custom models, and a response prompted from a generative artificial intelligence (AI) model; and rendering the guidance data on the client device.

To the accomplishment of the foregoing and related ends, certain illustrative aspects are described herein in connection with the following description and the annexed drawings. These aspects are indicative of various ways which can be practiced, all of which are intended to be covered herein. Other advantages and novel features may become apparent from the following detailed description when considered in conjunction with the drawings.

### BRIEF DESCRIPTION OF THE DRAWINGS

FIG. 1 is a block diagram of an example industrial control environment.
FIG. 2 is a block diagram of a work order management system.
FIG. 3 is a diagram illustrating generation of work orders using the work order management system.
FIG. 4 is a diagram illustrating an example architecture for automatically generating work orders based on analysis of real-time or historical industrial asset performance.
FIG. 5 is a diagram illustrating training of custom models used by some embodiments of the work order management system.
FIG. 6 is a diagram illustrating generation and provision of intelligent maintenance guidance by the work order management system.
FIG. 7 is a diagram illustrating exchange of generative AI dialog messages between a user and the work order management system.
FIG. 8 is a diagram of an example architecture of the work order management system that incorporates a digital twin to generate data for the analysis component and associated custom models.
FIG. 9 is a flowchart an example methodology for providing dynamic guidance for performing maintenance tasks on industrial assets.
FIG. 10a is a flowchart of a first part of an example methodology for providing chat-based assistance to a technician in connection with performing a maintenance task on an industrial asset.
FIG. 10b is a flowchart a second part of the example methodology for providing chat-based assistance to a technician in connection with performing a maintenance task on an industrial asset.
FIG. 11 is an example computing environment.
FIG. 12 is an example networking environment.

### DETAILED DESCRIPTION

The subject disclosure is now described with reference to the drawings, wherein like reference numerals are used to refer to like elements throughout. In the following description, for purposes of explanation, numerous specific details are set forth in order to provide a thorough understanding thereof. It may be evident, however, that the subject disclosure can be practiced without these specific details. In other instances, well-known structures and devices are shown in block diagram form in order to facilitate a description thereof.

As used in this application, the terms "component," "system," "platform," "layer," "controller," "terminal," "station," "node," "interface" are intended to refer to a computer-related entity or an entity related to, or that is part of, an operational apparatus with one or more specific functionalities, wherein such entities can be either hardware, a combination of hardware and software, software, or software in execution. For example, a component can be, but is not limited to being, a process running on a processor, a processor, a hard disk drive, multiple storage drives (of optical or magnetic storage medium) including affixed (e.g., screwed or bolted) or removable affixed solid-state storage drives; an object; an executable; a thread of execution; a computer-executable program, and/or a computer. By way of illustration, both an application running on a server and the server can be a component. One or more components can reside within a process and/or thread of execution, and a component can be localized on one computer and/or distributed between two or more computers. Also, components as described herein can execute from various computer readable storage media having various data structures stored thereon. The components may communicate via local and/or remote processes such as in accordance with a signal having one or more data packets (e.g., data from one component interacting with another component in a local system, distributed system, and/or across a network such as the Internet with other systems via the signal). As another example, a component can be an apparatus with specific functionality provided by mechanical parts operated by electric or electronic circuitry which is operated by a software or a firmware application executed by a processor, wherein the processor can be internal or external to the apparatus and executes at least a part of the software or firmware application. As yet another example, a component can be an apparatus that provides specific functionality through electronic components without mechanical parts, the electronic components can include a processor therein to execute software or firmware that provides at least in part the functionality of the electronic components. As further yet another example, interface(s) can include input/output (I/O) components as well as associated processor, application, or Application Programming Interface (API) components. While the foregoing examples are directed to aspects of a component, the exemplified aspects or features also apply to a system, platform, interface, layer, controller, terminal, and the like.

As used herein, the terms "to infer" and "inference" refer generally to the process of reasoning about or inferring states of the system, environment, and/or user from a set of observations as captured via events and/or data. Inference can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources.

In addition, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

Furthermore, the term "set" as employed herein excludes the empty set; e.g., the set with no elements therein. Thus, a "set" in the subject disclosure includes one or more elements or entities. As an illustration, a set of controllers includes one or more controllers; a set of data resources includes one or more data resources; etc. Likewise, the term "group" as utilized herein refers to a collection of one or more entities; e.g., a group of nodes refers to one or more nodes.

Various aspects or features will be presented in terms of systems that may include a number of devices, components, modules, and the like. It is to be understood and appreciated that the various systems may include additional devices, components, modules, etc. and/or may not include all of the devices, components, modules etc. discussed in connection with the figures. A combination of these approaches also can be used.

Industrial controllers, their associated I/O devices, motor drives, and other such industrial devices are central to the operation of modern automation systems. Industrial controllers interact with field devices on the plant floor to control automated processes relating to such objectives as product manufacture, material handling, batch processing, supervisory control, and other such applications. Industrial controllers store and execute user-defined control programs to effect decision-making in connection with the controlled process. Such programs can include, but are not limited to, ladder logic, sequential function charts, function block diagrams, structured text, or other such platforms.

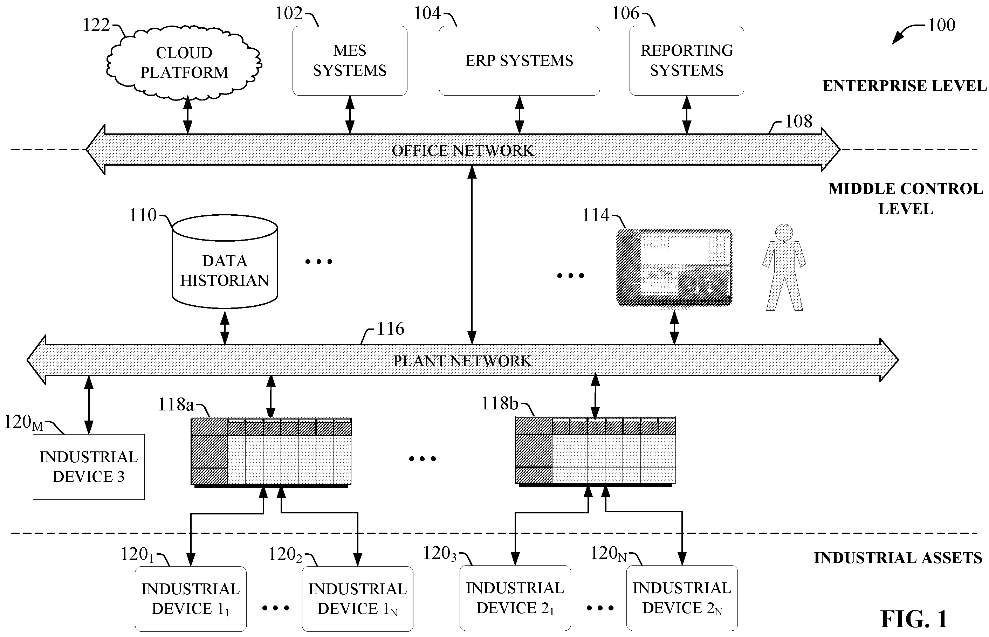

FIG. 1 is a block diagram of an example industrial control environment 100. In this example, a number of industrial controllers 118 are deployed throughout an industrial plant environment to monitor and control respective industrial systems or processes relating to product manufacture, machining, motion control, batch processing, material handling, or other such industrial functions. Industrial controllers 118 typically execute respective control programs to facilitate monitoring and control of industrial devices 120 making up the controlled industrial assets or systems (e.g., industrial machines). One or more industrial controllers 118 may also comprise a soft controller executed on a personal computer or other hardware platform, or on a cloud platform. Some hybrid devices may also combine controller functionality with other functions (e.g., visualization). The control programs executed by industrial controllers 118 can comprise any conceivable type of code used to process input signals read from the industrial devices 120 and to control output signals generated by the industrial controllers, including but not limited to ladder logic, sequential function charts, function block diagrams, or structured text.

Industrial devices 120 may include both input devices that provide data relating to the controlled industrial systems to the industrial controllers 118, and output devices that respond to control signals generated by the industrial controllers 118 to control aspects of the industrial systems. Example input devices can include telemetry devices (e.g., temperature sensors, flow meters, level sensors, pressure sensors, etc.), manual operator control devices (e.g., push buttons, selector switches, etc.), safety monitoring devices (e.g., safety mats, safety pull cords, light curtains, etc.), and other such devices. Output devices may include motor drives, pneumatic actuators, signaling devices, robot control inputs, valves, and the like. Some industrial devices, such as industrial device 120_{M}, may operate autonomously on the plant network 116 without being controlled by an industrial controller 118.

Industrial controllers 118 may communicatively interface with industrial devices 120 over hardwired or networked connections. For example, industrial controllers 118 can be equipped with native hardwired inputs and outputs that communicate with the industrial devices 120 to effect control of the devices. The native controller I/O can include digital I/O that transmits and receives discrete voltage signals to and from the field devices, or analog I/O that transmits and receives analog voltage or current signals to and from the devices. The controller I/O can communicate with a controller's processor over a backplane such that the digital and analog signals can be read into and controlled by the control programs. Industrial controllers 118 can also communicate with industrial devices 120 over the plant network 116 using, for example, a communication module or an integrated networking port. Exemplary networks can include the Internet, intranets, Ethernet, DeviceNet, ControlNet, Data Highway and Data Highway Plus (DH/DH+), Remote I/O, Fieldbus, Modbus, Profibus, wireless networks, serial protocols, and the like. The industrial controllers 118 can also store persisted data values that can be referenced by the control program and used for control decisions, including but not limited to measured or calculated values representing operational states of a controlled machine or process (e.g., tank levels, positions, alarms, etc.) or captured time series data that is collected during operation of the automation system (e.g., status information for multiple points in time, diagnostic occurrences, etc.). Similarly, some intelligent devices - including but not limited to motor drives, instruments, or condition monitoring modules - may store data values that are used for control and/or to visualize states of operation. Such devices may also capture time-series data or events on a log for later retrieval and viewing.

Industrial automation systems often include one or more human-machine interfaces (HMIs) 114 that allow plant personnel to view telemetry and status data associated with the automation systems, and to control some aspects of system operation. HMIs 114 may communicate with one or more of the industrial controllers 118 over a plant network 116, and exchange data with the industrial controllers to facilitate visualization of information relating to the controlled industrial processes on one or more pre-developed operator interface screens. HMIs 114 can also be configured to allow operators to submit data to specified data tags or memory addresses of the industrial controllers 118, thereby providing a means for operators to issue commands to the controlled systems (e.g., cycle start commands, device actuation commands, etc.), to modify setpoint values, etc. HMIs 114 can generate one or more display screens through which the operator interacts with the industrial controllers 118, and thereby with the controlled processes and/or systems. Example display screens can visualize present states of industrial systems or their associated devices using graphical representations of the processes that display metered or calculated values, employ color or position animations based on state, render alarm notifications, or employ other such techniques for presenting relevant data to the operator. Data presented in this manner is read from industrial controllers 118 by HMIs 114 and presented on one or more of the display screens according to display formats chosen by the HMI developer. HMIs may comprise fixed location or mobile devices with either user-installed or pre-installed operating systems, and either user-installed or pre-installed graphical application software.

Some industrial environments may also include other systems or devices relating to specific aspects of the controlled industrial systems. These may include, for example, one or more data historians 110 that aggregate and store production information collected from the industrial controllers 118 and other industrial devices.

Industrial devices 120, industrial controllers 118, HMIs 114, associated controlled industrial assets, and other plant-floor systems such as data historians 110, vision systems, and other such systems operate on the operational technology (OT) level of the industrial environment. Higher level analytic and reporting systems may operate at the higher enterprise level of the industrial environment in the information technology (IT) domain; e.g., on an office network 108 or on a cloud platform 122. These higher level systems can include, for example, enterprise resource planning (ERP) systems 104 that integrate and collectively manage high-level business operations, such as finance, sales, order management, marketing, human resources, or other such business functions. Manufacturing Execution Systems (MES) 102 can monitor and manage control operations on the control level in view of higher-level business considerations, driving those control-level operations toward outcomes that satisfy defined business goals (e.g., order fulfillment, resource tracking and management, asset utilization tracking, etc.). Reporting systems 106 can collect operational data from industrial devices on the plant floor and generate daily or shift reports that summarize operational statistics of the controlled industrial assets.

Industrial facilities typically house and operate many industrial assets, machines, or equipment. Many of these assets require regular proactive maintenance to ensure continued optimal operation, in addition to unplanned repair operations to address unexpected downtime events, such as machine malfunctions. To manage the large number of maintenance operations carried out at a given industrial enterprise, work order management systems can be used to initiate work orders for new maintenance operations to be performed and to track the statuses of these work orders. Maintenance technicians or managers can fill out and submit work orders for respective maintenance operations or tasks to the system. A work order typically remains open as its corresponding maintenance task is performed, and is then closed once the task is completed.

However, these work order management systems typically provide only crude status tracking capabilities for maintenance tasks, such as recording the open or closed statuses of work orders and other basic information about the maintenance tasks to be performed. Beyond basic descriptions of the maintenance tasks to be performed, these systems offer no dynamic maintenance guidance to maintenance personnel during performance of the maintenance tasks defined by the work orders.

To address these and other issues, one or more embodiments described herein provide a work order management system that leverages generative artificial intelligence (AI) to provide dynamic maintenance recommendations and guidance to assist with execution of scheduled or reactive maintenance tasks. In one or more embodiments, the work order management system can process technicians' natural language requests for assistance in performing a maintenance task on an industrial asset, and formulate guidance and recommendations based on the nature of the request, knowledge of the asset, learned optimal workflows for successfully performing the task, and other such information. As needed, the system can also prompt a generative AI model for supplemental information that can assist in formulating accurate maintenance guidance and recommendations. In some embodiments, the system can also monitor maintenance actions being performed by a technician and provide proactive guidance when the technician's behaviors indicate that assistance with a current maintenance task is required.

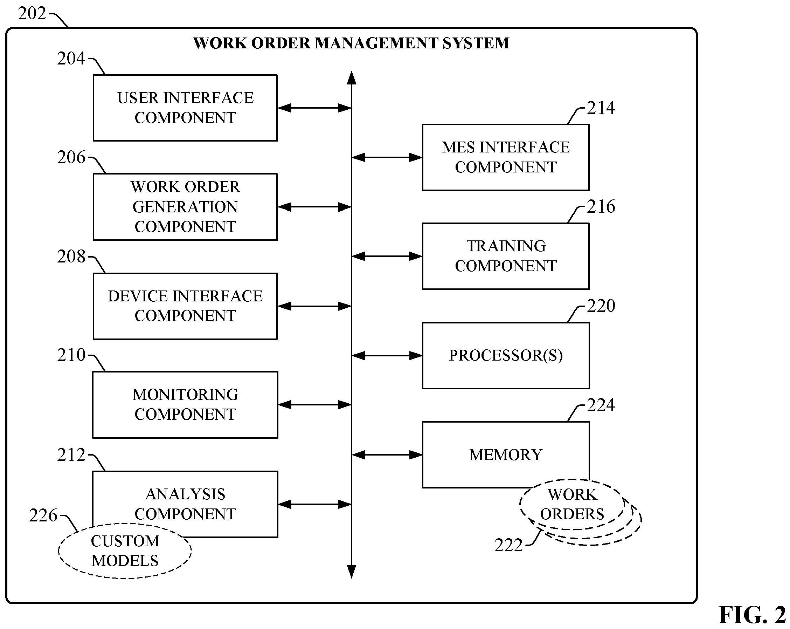

FIG. 2 is a block diagram of a work order management system 202 according to one or more embodiments of this disclosure. Aspects of the systems, apparatuses, or processes explained in this disclosure can constitute machine-executable components embodied within machine(s), e.g., embodied in one or more computer-readable mediums (or media) associated with one or more machines. Such components, when executed by one or more machines, e.g., computer(s), computing device(s), automation device(s), virtual machine(s), etc., can cause the machine(s) to perform the operations described.

Work order management system 202 can include a user interface component 204, a work order generation component 206, a device interface component 208, a monitoring component 210, an analysis component 212, an MES interface component 214, a training component 216, one or more processors 220, and memory 224. In various embodiments, one or more of the user interface component 204, work order generation component 206, device interface component 208, monitoring component 210, analysis component 212, MES interface component 214, training component 216, the one or more processors 220, and memory 224 can be electrically and/or communicatively coupled to one another to perform one or more of the functions of the work order management system 202. In some embodiments, components 204, 206, 208, 210, 212, 214, and 216 can comprise software instructions stored on memory 224 and executed by processor(s) 218. Work order management system 202 may also interact with other hardware and/or software components not depicted in FIG. 2. For example, processor(s) 220 may interact with one or more external user interface devices, such as a keyboard, a mouse, a display monitor, a touchscreen, or other such interface devices.

User interface component 204 can be configured to generate user interface displays or copilot interfaces that receive user input and render output to the user in any suitable format (e.g., visual, audio, tactile, etc.). In some embodiments, user interface component 204 can render these interface displays on a client device (e.g., a laptop computer, tablet computer, smart phone, etc.) that is communicatively connected to the work order management system 202 (e.g., via a hardwired or wireless connection). Input data that can be received via user interface component 204 can include, but is not limited to, work order data (e.g., work order data field entries), user interface navigation input, natural language questions or requests, or other such input data. Output data rendered by user interface component 204 can include, but is not limited to, information regarding closed and open work orders, maintenance recommendations or guidance, recommended workflows for performing a maintenance task defined by a work order, natural language responses to a technician's question or request, or other such output data.

Work order generation component 206 can be configured to generate work orders 222 based on user-submitted information about a maintenance task to be performed, or based on detected or predicted asset risks. Device interface component 208 can be configured to interface with industrial devices or assets on the plant floor, either directly or via a gateway or edge device, and receive real-time operational and status data from these assets for the purposes of asset health monitoring and analysis. Monitoring component 210 can be configured to monitor specified sets of the collected industrial data for conditions indicative of a performance issue requiring investigation or maintenance. In some embodiments, the sets of industrial data to be monitored, as well as the conditions of this data that indicate a performance concern that requires a maintenance task to be scheduled, can be determined or defined by the system 202 based on analysis of the assets' performance over time, or can be manually configured by an administrator of the system 202. The monitoring component 210 can also monitor certain human behaviors, such as those performed by maintenance personnel in connection with performing maintenance tasks associated with respective work orders 222.

Analysis component 212 can be configured to generate maintenance guidance information or recommendations in connection with performing a maintenance task based on analysis of any of open or closed work order data, technician behavior data, real-time and historical asset performance data, or data obtained from an MES system or similar high-level enterprise system. In some embodiments, the analysis component 212 can use generative AI and an associated chatbot to generate these recommendations or to generate natural language responses to a technician's natural language questions or request for information. To this end, the analysis component 212 can implement prompt engineering functionality using associated custom models 226 trained with domain-specific industrial training data, or, alternatively, one or more knowledge bases containing this training data. As needed, the analysis component 212 can generate and submit prompts to one or more generative AI models and associated neural networks, where these prompts are generated based on a user's monitored behavior or natural language queries, as well as domain-specific information contained in the custom models 226. Depending on the circumstances of a current maintenance task being performed or the nature of the user's natural language query, the responses returned by the generative AI model in response to the prompts can be used by the analysis component 212 or the user interface component 204 to generate and render maintenance guidance.

MES interface component 214 can be configured to retrieve, from an MES system or another source of industrial enterprise data, information that can be used by the analysis component 212 in connection with formulating maintenance recommendations or guidance. Training component 216 can be configured to train one or more custom models 226 with various types of relevant training data. These custom models 226 are used by the system 202 in connection with generating maintenance recommendations, as well as generating suitable prompts to a generative AI model as needed to assist with formulating these recommendations.

The one or more processors 220 can perform one or more of the functions described herein with reference to the systems and/or methods disclosed. Memory 224 can be a computer-readable storage medium that stores computer-executable instructions and/or information for performing the functions described herein with reference to the systems and/or methods disclosed. Memory 224 can also store work order data submitted by users as work orders 222.

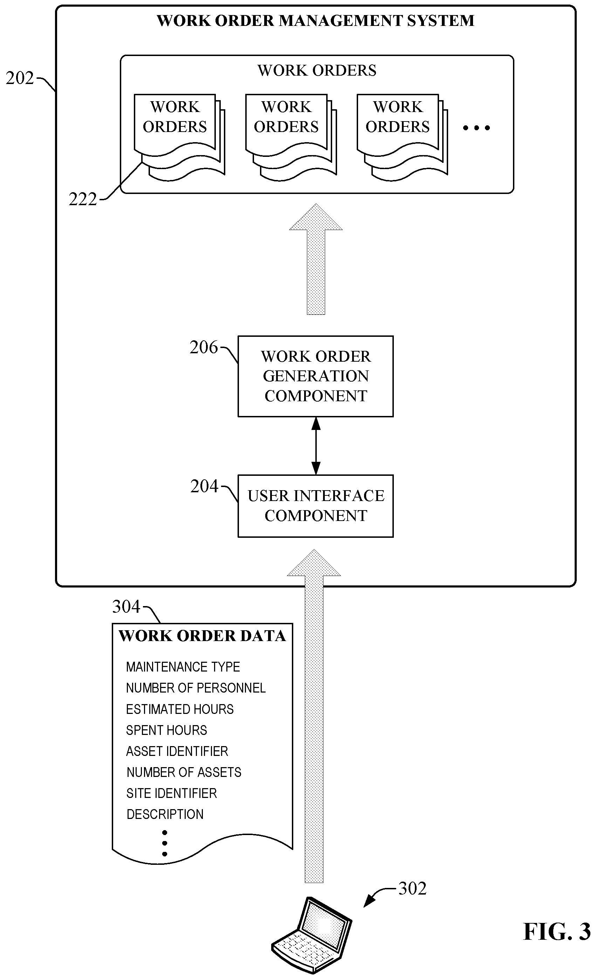

FIG. 3 is a diagram illustrating generation of work orders 222 using the work order management system 202 according to one or more embodiments. Work order management system 202 can be implemented on any suitable platform that allows the system 202 to be accessed via client devices 302 (e.g., desktop computers, laptop computers, smart phones, tablet computers, wearable computing devices, etc.). For example, system 202 can be installed and executed on an on-premise server device on a plant or office network of an industrial facility. Alternatively, system 202 can be executed on a cloud platform as a set of cloud-based services, allowing users at different industrial facilities to access the system 202 and initiate work orders 222, view work orders 222, or receive maintenance guidance from the system 202. System 202 can also be executed on a public network such as the internet and made accessible to users having suitable authorization credentials. In such embodiments, the system 202 can maintain work orders 222 for different industrial enterprises in a segregated manner, such that employees of a given industrial enterprise can only access work orders and associated analysis results associated with that enterprise.

The user interface component 204 can allow client devices 302 to communicatively interface with the work order management system 202 and submit work order data 304. This work order data 304 can represent either a newly initiated work order for a maintenance task to be performed, or updated information for an open work order 222 that was previously submitted to the system 202. Substantially any work order format can be supported by various embodiments of work order management system 202. In an example scenario, user interface component 204 can generate and deliver, to the client device 302, user interface displays comprising editable data fields representing features of the maintenance job represented by the work order 222. Items of work order data 304 that can be submitted to the system 202 in this manner can include, but are not limited to, a type of maintenance to be performed, a description of the maintenance, the number of personnel required to perform the maintenance, an estimated number of hours to perform the maintenance, an actual number of hours spent on the job, identities and numbers of industrial assets that are subject to the maintenance, identities of industrial sites or facilities in which the maintenance takes place, materials to be used to perform the job, an expected cost to perform the job (e.g., costs of replacement parts), or other such information.

Embodiments of the work order management system 202 are not limited to submission of work order data 304 via such user interfaces. For example, in some embodiments the system 202 can allow the user to submit work order data 304 as natural language text or speech via a chat interface rendered by the system 202. In such embodiments, the work order generation component 206 can translate this natural language input to corresponding work order data 304 which is then used to populate the content of the relevant work order 222.

Based on submitted work order data 304 describing a reactive or proactive maintenance task to be performed, work order generation component 206 can generate a work order 222 containing information about the maintenance task (or set of tasks) to be performed. The system 202 can classify each work order 222 as either an open work order representing a pending maintenance job to be performed on one or more industrial assets (e.g., machines, production lines, industrial devices, etc.) or a closed work order representing a maintenance job that has been completed.

Creation of work orders 222 via manual submission of work order data 304 by plant personnel, as illustrated in FIG. 3, can be suitable for initiating work orders 222 for reactive maintenance tasks, in which the maintenance tasks are intended to address an unexpected asset performance problem or risk condition. Additionally or alternatively, some embodiments of the work order management system 202 can generate some types of work orders 222 automatically according to a defined maintenance schedule. For example, the work order generation component 206 can be configured to automatically generate and schedule work orders 222 for proactive or scheduled maintenance tasks designed to prolong an industrial asset's lifecycle or to proactively prevent asset failures or performance inefficiencies. These proactive maintenance actions can include, for example, oil changes, inspection routines, proactive replacement of parts at regular intervals, or other such scheduled maintenance tasks. The system 202 can generate and schedule these proactive work orders 222 at regular or semi-regular intervals according to a defined frequency at which the maintenance is to be conducted.

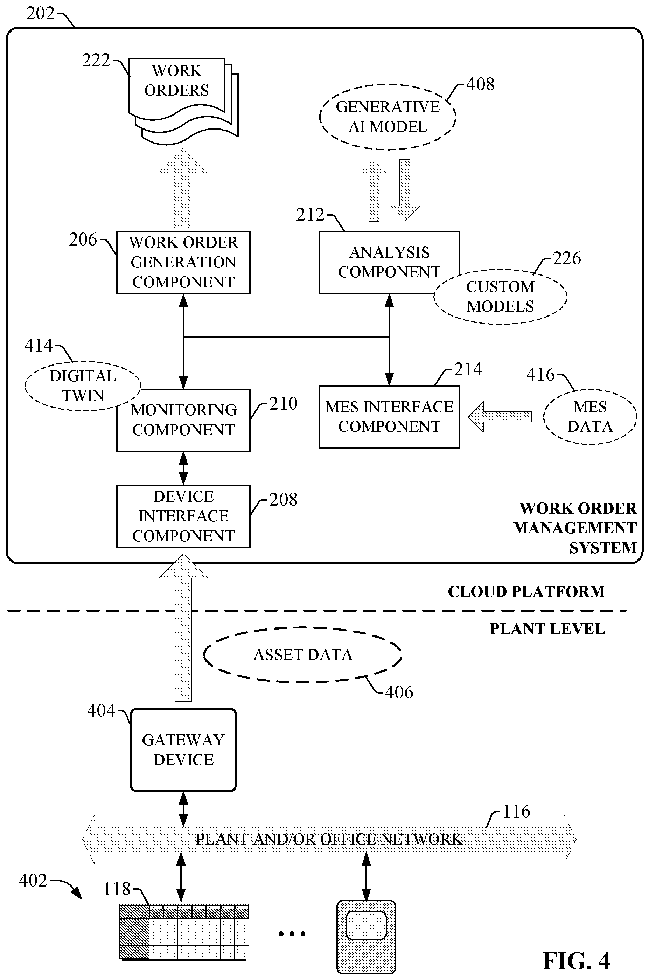

Also, some embodiments of the system 202 can automatically generate reactive work orders 222 in response to real-time detection of an asset performance issue. FIG. 4 is a diagram illustrating an example architecture for automatically generating work orders 222 based on analysis of real-time or historical industrial asset performance. In the example architecture of FIG. 4, a gateway device 404 resides on the same plant network 116 as the industrial devices 402 associated with automation systems on the plant floor. These industrial devices 402 can include, for example, industrial controllers 118, motor drives, HMI terminals, telemetry devices (e.g., flow meters, pressure meters, temperature meters, etc.), sensors of various types (e.g., photo-sensors, proximity sensors, etc.), or other such devices. The automation systems and their associated industrial devices 402, machines, and machine components constitute industrial assets for which reactive or proactive maintenance may be scheduled as needed. During operation of the plant's automation systems, gateway device 404 collects asset data 406 from industrial devices 402. This data can include data values read from data tags, data registers, or automation objects defined on one or more industrial controllers 118; data from analog or digital sensors; data from telemetry devices or meters; or other such data. In general, asset data 406 represents status, operational, or performance data for the industrial assets.

In some embodiments, gateway device 404 can contextualize the collected data 406 prior to delivering the data to the work order management system 202 and deliver the processed data to the system 202 as contextualized data. This contextualization can include time-stamping the data, as well as normalizing or otherwise formatting the collected data for analysis by the work order management system 202. In general, gateway device 404 serves as an edge device that interfaces data from the set of industrial devices 402 to either the work order management system 202 or a separate data storage platform accessible to the work order management system 202.

The work order management system's device interface component 208 can remotely interface with the gateway device 404 to receive the collected asset data 406, and the system's monitoring component 210 can monitor the asset data 406 for conditions indicative of a possible performance issue that necessitates a maintenance action and creation of a corresponding work order 222. In some embodiments, rather than obtaining asset data 406 from the industrial assets (e.g., industrial devices 402 and their associated machines or automation systems) via an integrated device interface component 806, the system's monitoring component 210 may access other sources of real-time or historical asset data 406 generated by the industrial assets within the plant facility, such as a data historian system, a data lake, or other such systems. Robots can also be used to provide at least some of the asset data 406, which can be used by the system 202 in connection with identifying asset performance issues and generating work orders. For example, inspection robots can traverse inspection routes and collect machine states (e.g., via infrared panel scans, meter readings, etc.) and feed this information to the work order management system 202 as asset data 406.

When the monitoring component 210, assisted by the analysis component 212, determines that the monitored asset data 406 satisfies a condition indicative of a current or predicted asset performance issue requiring investigation or correction by maintenance personnel, system's work order generation component 206 can schedule one or more maintenance tasks predicted to correct the performance issue and generate a corresponding work order 222 for the tasks. The condition detected by the monitoring component 210 that triggers creation of a work order 222 can be, for example, a deviation of one or more data tag values that move outside a defined range of normal or expected values, or a deviation of a trend of these data tag values from a learned trend indicative of normal or acceptable asset performance.

In an example scenario, a baking process may require an oven temperature to stay within a defined temperature range. Accordingly, values of a data tag or automation object corresponding to this oven temperature can be collected from the industrial controller 118 that monitors and controls the baking process, and this collected data can be provided to the work order management system 202 as part of the asset data 406. The monitoring component 210 can monitor this value to determine when the oven temperature deviates from this range and, in response to detecting such a deviation, instruct work order generation component 206 to generate a new open work order 222 for investigation of the temperature control issue. In some embodiments, machine-specific asset models maintained on the work order management system 202 can define which data items or performance parameters of the industrial assets are to be monitored, as well as the conditions of this data that are to trigger creation of work orders 222. In other embodiments, the analysis component 212 can learn to recognize conditions of the asset data indicative of an elevated risk to an asset using machine learning, AI, generative AI, or other analytic techniques.

A work order 222 generated by the work order generation component 206 can contain information about the maintenance task to be performed, including but not limited to an identity of the industrial asset or machine for which maintenance is required, an aspect of the industrial asset that requires attention, a type of the maintenance to be performed, an estimated number of hours to be spent on the maintenance task, an estimated number of personnel to be assigned to the task, a description of the task, or other such information. The work order 222 is initially scheduled in the system 202 as an open work order 222 (that is, the system 202 stores the work order 222 as work order data in memory 224 and assigns an "Open" status to the work order 222) and remains open until completion of its associated maintenance tasks, at which time the system 202 assigns a "Closed" status to the work order 222. Authorized users can browse and view both open and closed work orders 222 via user interface component 204.

Some embodiments of the work order management system 202 can reference information about the industrial assets in use within a plant facility, and the functional or geographic relationships between these assets, in connection with determining when to schedule maintenance activities or generating maintenance planning and tracking data (as will be described in more detail below). In some embodiments, this information can be maintained in a digital twin 414 that models the industrial machines, systems, or assets within the plant facility as well as the functional or geographical relationships between those assets. For example, the digital twin 414 may define the relative locations of respective machines or automation systems within the plant, functional relationships between the machines (e.g., interdependencies between the machines or systems, such as indications of which automation systems are responsible for providing material or parts to other downstream systems), or other such asset information.

As noted above, the analysis component 212 can assist the monitoring component 210 to identify scenarios indicative of an elevated asset risk requiring generation of work orders 222. In such embodiments, the analysis component 212 can apply one or more types of analysis - including AI or generative AI-assisted analysis or machine learning, etc. - to real-time or historical asset data 406, MES data 416 from the plant facility's MES system or another high-level plant managements system, and other contextual data in connection with determining when to schedule maintenance tasks, what these maintenance tasks entail, or which technicians are to be assigned the tasks. For example, in some embodiments the analysis component 212 can leverage generative AI to automatically generate work orders 222 or otherwise schedule maintenance tasks based on predicted or detected asset risks. To this end, the analysis component 212 can be configured with prompt engineering functionality using associated custom models 226 trained with various types of training data, and can use these prompt engineering features to interface with a generative AI model 408 (e.g., a large language model (LLM) or another type of model) and associated neural networks.

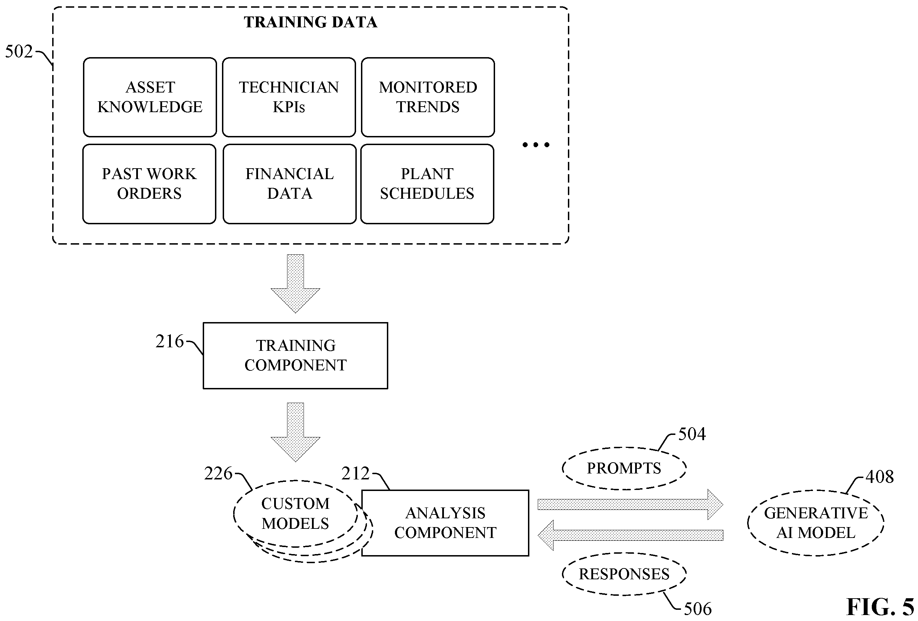

FIG. 5 is a diagram illustrating training of the custom models 226 used by some embodiments of the analysis component 212. The system's training component 216 can train the models 226 using training data 502 relevant to identification or prediction of risks to the plant facility's industrial assets, or training data 502 relevant to formulation of maintenance guidance and recommendations for planning and executing maintenance tasks. Such training data 502 can include, but is not limited to, knowledge or technical specifications of industrial assets, machines, and devices that are in service within the industrial facility; information from past or closed work orders 222; monitored trends in asset operation (e.g., histories and frequencies of asset failure); information about technicians employed by the plant facility (e.g., employee identities, skill sets, work histories relative to specific assets or types of maintenance tasks, work schedules etc.); help files; vendor knowledgebases; training materials; information defining industrial standards (e.g., global or vertical-specific safety standards, food and drug standards, design standards such as the ISA-88 standard, etc.); technical specifics of various types of industrial control applications (e.g., batch control processes, die casting, valve control, agitator control, etc.); knowledge of specific industrial verticals; knowledge of industrial best practices; histories of past maintenance actions performed by technicians to successfully carry out various types of maintenance tasks on industrial assets; or other such data 502.

In some embodiments, the system 202 can maintain both shared models 226 that are trained using globally applicable industrial training data 502 and used by the analysis component 212 for all registered industrial customers, as well as customer-specific custom models 226 assigned exclusively to respective customers and trained using proprietary training data 502 submitted by, or collected from, their respective customers. In such embodiments, for a given industrial customer, the analysis component 212 can perform the various analytics described herein using both the shared models 226 and the customer's own proprietary model 226. For models 226 that are shared across multiple customers, the shared models 226 can be trained with both globally available training data 502 - e.g., information from device or asset manuals, common industrial design or operating standards, etc. - as well as anonymized operational and maintenance data collected from multiple different customer entities. In the latter case, the training data 502 collected from specific customers can be selectively anonymized using rules-based anonymizing or an agent that flags or anonymizes selected information (e.g., financial data or patentable technical data). This type of training, using multi-customer training data 502, can record the various ways that different customers use the same type of industrial machine or asset. For example, some customers may operate a certain type of machine closer to its operating tolerances than other customers, while other customers who are more averse to machine downtime may operate the machine more conservatively relative to its operating tolerances. The system 202 can learn these different approaches to operating similar types of assets based on anonymized operating data collected from the assets. Knowledge of these different operating approaches can be used by the system 202 to customize maintenance recommendations and guidance for respective customers based on their preferred manner of operating their industrial assets.

For customer-specific models 226, customer-specific training data 502 can be sandboxed on the cloud platform on which the system 202 operates to ensure isolation between the customer-specific sets of training data 502. The user interface component 204 can also render user interfaces that allow customers to provide their own training data 502 (e.g., maintenance history information, OEM manuals, maintenance notes, photographs of broken assets, etc.) to ensure that only high-quality data 502 is provided to the customer's model 226. In some embodiments, the training component 216 can also convert training documents submitted by customers to vectors and save the resulting vector data in the cloud for querying purposes. In some embodiments, the training component 216, together with the user interface component 204 can also allow a customer-specific custom model 226 to be trained verbally by the customer via a chat interface. In such embodiments, the chat interface can interrogate experienced technicians about an asset or maintenance procedure for which those technicians have experience, and generate training data 502 based on the technician's responses to these questions using voice-to-text translation.

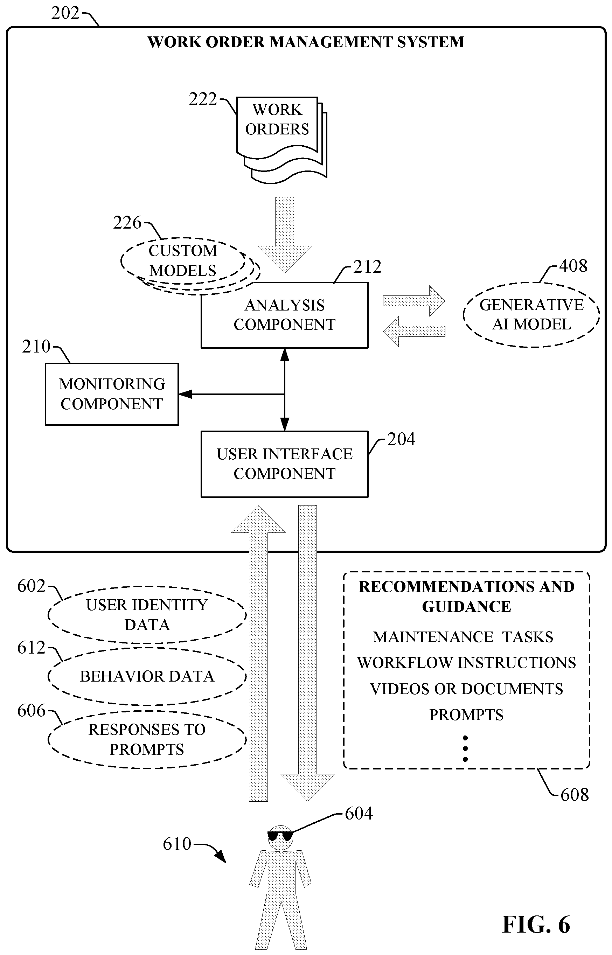

Some embodiments of the training component 216 can also train a customer-specific custom model 226 based on learned maintenance behaviors and practices, such as observed maintenance workflows, inputs, orders of operations performed by technicians when performing a specific type of maintenance task, or other such learned behaviors. These practices can be learned by the training component 216 based on monitored technician behavior data 612 (see FIG. 6, discussed below), information obtained from closed work orders 222, or selected subsets of asset data 406 (from which the training component 216 can learn a degree of success correlated with specific maintenance workflows, orders of operation, or maintenance practices).

As an alternative to the use of trained custom models 226 by the analysis component 212, some embodiments of the system 202 can store the training data in one or more knowledgebases, which can be accessed or referenced by the analysis component 212 as needed. In some embodiments, the work order management system 202 can automatically collect and aggregate some or all of the training data 502 and store the aggregated training data 502 in multiple knowledgebases for access by the analysis component 212. In such embodiments, the system can maintain segregation between globally applicable training data and respective customer-specific sets of training data.

In embodiments in which the system 202 automatically generates work orders 222 in response to detected risk conditions, the monitoring component 210 and analysis component 212 can detect a current asset risk condition (or predict a future asset risk condition) that requires scheduling of a maintenance task and generation of a corresponding work order 222 based on analysis of real-time or historical asset data 406 as well as content of the custom models 226 In some scenarios, this analysis can be performed without accessing the generative AI model 408. However, the analysis component 212 can also, as needed, interact with the generative AI model 408 as part of the risk detection analysis, or as part of the work order generation process. For example, as the work order management system 202 is monitoring asset data 406 for risk conditions, the analysis component 212 can determine whether a given subset of the asset data 406 generated by an industrial asset or related groups of assets is indicative of a risk condition based on knowledge of the relevant industrial assets (e.g., values of performance indicators known or inferred to correlate with a risk condition for those specific assets, the nature of the risk condition indicated by anomalous values of those performance indicators, lifecycle information for the assets, etc.). This asset knowledge can be obtained from technical asset information encoded in the custom models 226 as part of training data 502 or can be prompted from the generative AI model 408 using suitable prompts 504 formulated by the analysis component 212 to obtain responses 506 containing the relevant asset knowledge.

Similarly, when an asset risk is detected, the analysis component 212 can determine a suitable set of maintenance tasks for mitigating the detected or predicted risk based on the training data 502 encoded in the models 226, as well as responses 506 prompted from the generative AI model 408. Responses 506 prompted from the generative AI model 408 can also be used by the work order generation component 206 to generate natural language content to be included in the corresponding work order 222 (e.g., natural language descriptions of the asset risk, natural language descriptions of the maintenance tasks rendered, etc.).

While work orders 222 for scheduled or reactive maintenance tasks are currently open, the work order management system 202 can provide intelligent recommendations and guidance that assist technicians with planning and performing the maintenance tasks prescribed by the open work orders 222. FIG. 6 is a diagram illustrating generation and provision of intelligent maintenance guidance by the work order management system 202 in one or more embodiments. In the illustrated example, a technician 610 carries a trackable client device 604 capable of generating data describing the technician's identity, location, and behaviors, and submitting this data to the work order management system 202 (e.g., via user interface component 204). Client device 604 can be, for example, a wearable appliance such as an augmented reality (AR) headset worn by the technician 610 and comprising a transparent or semitransparent viewing lens or screen through which the technician 610 views his or her surroundings, and which can render graphical or alphanumeric information at selected locations on the lens or screen, thereby overlaying information onto the user's field of view. Alternatively, the client device 604 may be another type of work or carried personal device, such as a mobile phone or device with display capabilities.

As the technician 610 is engaged in performing a maintenance task associated with a work order 222 to which the technician 610 is assigned, the system's user interface component 204 can collect, from the technician's client device 604 or another source, user identity data 602 that uniquely identifies the technician 610, as well as behavior data 612 describing at least the user's current location within the plant facility. In some embodiments, the behavior data 612 may also describe other technician behaviors that are observable by the client device 604, including but not limited to the technician's manual activities as the technician is performing a maintenance task, natural language input recorded from the user's speech, or other such behaviors.

Analysis component 212 can formulate guidance data 608 designed to assist the technician 610 in performing maintenance tasks prescribed by open work orders 222 based on analysis of information contained in open work orders 222 (e.g., information identifying the industrial asset on which maintenance is to performed, the nature of the maintenance action to be performed, etc.), information contained in the custom models 226 (or the training data 502 described above), responses 506 prompted from the generative AI model 408 containing relevant supplemental information, the technician's current activities as determined from behavior data 612, relevant subsets of MES data 416, or any combination of this information. The user interface component 204 can deliver this guidance data 608 to the technician's client device 604 as text-based guidance information rendered on a user interface or dashboard, an AR presentation overlayed on the technician's field of view (e.g., AR graphics indicating a portion of the industrial asset on which the technician should be focused), a graphical illustration of a recommended maintenance workflow, reference images relating to a current maintenance task being performed by the technician 610 (e.g., a photograph or generated image of the device or asset illustrating a relevant portion of the asset or serving as an example of what the asset should look like before or after the maintenance), natural language chat output generated with the assistance of the generative AI model 408, or another format.

In an example scenario, the analysis component 212 can determine, based on analysis of the maintenance tasks prescribed by the open work orders 222 (both scheduled and reactive), a list of inspection or maintenance tasks that each of multiple available technicians 610 should perform on the present day or week, as well as a recommended order or priority for performing the tasks. The analysis component 212 can select the tasks, as well as the relative priorities of those tasks, to satisfy one or more defined optimization criteria, such as maximizing overall maintenance efficiency, minimizing the total time to execute the open work orders 222, minimizing labor costs associated with execution of the work orders 222, minimizing the number of technicians required to complete the work orders 222, minimizing the number of steps taken by the technicians to complete the work orders, or other such criteria.

As a technician is performing a maintenance task prescribed by a work order 222, the analysis component 212 can select or generate videos, images, documentation, or other guidance materials relevant to the task being performed, either in response to a requests for additional information submitted by the technician 310 (e.g., a request for clarification on a maintenance or inspection step in which the technician is currently engaged) or proactively based on monitored observation of the technician's progress while working through a task (as determined from the behavior data 612). The user interface component 204 can present this guidance information to the technician 610 as suitably formatted guidance data 608. For example, based on knowledge of the present maintenance task being performed by a technician 610 and observation of the technician's behavior data 612, the analysis component 212 may determine that the technician 610 has been engaged in a particular step of the maintenance task for a length of time that exceeds an expected duration of time required to perform this step. The analysis component 212 can determine or learn the expected duration of time to complete a given maintenance step based on such information as recorded durations of time taken to complete the step on the asset in the past, maintenance statistics recorded for other industrial customers using a similar asset (which can be part of the anonymized training data 502 recorded in custom models 226), responses 506 generated by the generative AI model 408 in response to prompts 504 requesting estimated times to complete the task, or other such information. In response to determining that the technician 610 has been engaged in the task in excess of the expected amount of time required to complete the task, the analysis component 212 can generate, as guidance data 608, a natural language instruction for performing the task, a video or photograph that visually demonstrates how the task should be performed, relevant information obtained from a technical manual for the asset or device on which the task is being performed, AR graphics overlayed over the technician's field of view indicating where the technician's focus should be for the current step, or other such information.

To minimize intrusions while the technician is working, some embodiments of the analysis component 212 can monitor the technician's behavior data 612 as the technician 610 is performing a maintenance task, and will only intervene with guidance data 608 if the behavior data 612 indicates that the technician's actions have deviated from a known optimal workflow for performing the maintenance task. In some embodiments, the analysis component 212 can learn this optimal workflow over time based on observations of workflows performed by technicians in the past that have resulted in successful completion of the maintenance task.

In some embodiments, the analysis component 212 can prompt the technician 610 for feedback indicating whether the guidance data 608 was helpful in connection with completing the maintenance task. The technician 610 can provide this feedback as a response 606 (e.g., a natural language spoken or text response, a binary indication as to whether the response 606 was helpful or solved a given maintenance problem), and the training component 216 can retrain or fine-tune the custom models 226 based on this feedback.

Some embodiments of the system 202 can also generate and render guidance data 608 that is not linked to an open work order 222, but rather is targeted to machine or line operators to assist those users in performing low-level preventative maintenance tasks, such as performing clean up duties, checking oil, preparing for shift changeover, performing inspections, or performing other such tasks that do not require a work order for maintenance. The system 202 can also target guidance data 608 to line operators in other scenarios to reduce the maintenance burden on technicians. For example, if a problem occurs on a production line or machine, the analysis component 212 and user interface component 204 can generate guidance data 608 that guides the machine operator through simple diagnostic checks that may lead to a solution to the problem without the need to create a work order 222 for the issue. In such scenarios, the system 202 will only escalate the problem to maintenance staff by generating a work order 222 if these diagnostic checks do not lead to a solution.

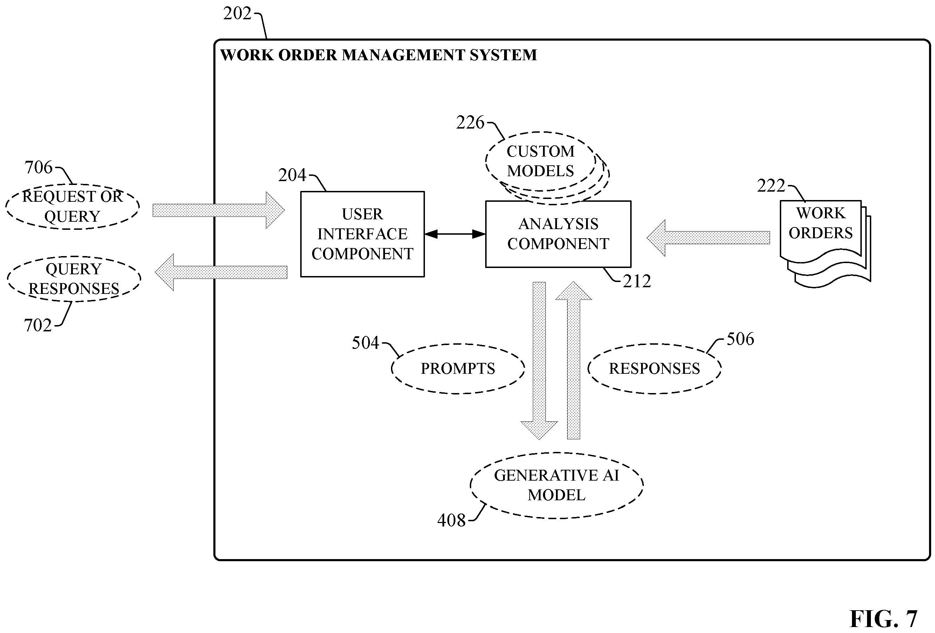

Some embodiments of the work order management system 202 can also incorporate a generative AI chat interface that allows a technician 610 to interact with the system 202 via natural language chat exchanges in connection with executing a maintenance task prescribed by the work order 222. In such embodiments, the system 202 can support industry-specific prompt engineering features that can formulate suitable prompts 504 for submission to the generative AI model 408 based on a user's natural language requests or queries. FIG. 7 is a diagram illustrating exchange of generative AI dialog messages between a user and the work order management system 202. Embodiments of the system 202 that support a generative AI-based chat interactions can render (via user interface component 204) a chat interface through which a user can exchange natural language prompts or chat conversations with the work order management system 202. This chat interface can include a data entry field for entering a user's natural language request or query 706 as a text string, or can support other input formats for a user's request or query 706, such as spoken-word audio input submitted via the technician's client device 604.

In general, the work order management system 202 can receive and process a user's natural language requests or queries 706, which can comprise questions about existing open or closed work orders 222, questions about asset risks, requests to create new work orders 222 for performing maintenance tasks, or other such prompts. During performance of a maintenance task in accordance with an open work order 222, technicians can also submit questions about the maintenance task as requests or queries 706. These can include, for example, natural language requests for guidance for performing a current step of the maintenance task, questions regarding the location of a particular component of the industrial asset or machine on which the task is to be performed (e.g., the location of a sensor, valve, or oil intake), or other such requests. The system 202 can use prompt engineering services to process natural language requests or queries 706 submitted by the user via the chat interface (or via a spoken word interface). These prompt engineering services can leverage knowledge encoded in the custom models 226 (as learned from training data 502), together with responses 506 prompted from the generative AI model 408, to accurately ascertain the user's needs and respond to the user's request or query 706.

When a user submits a natural language request or query 706 to the system 202, the analysis component 212 can analyze the query 706 based on any of the training data 502 encoded in the custom models 226 (e.g., technical specifics of the industrial assets in service within the plant facility, learned or encoded workflows for performing respective different types of maintenance actions on respective different types of industrial assets, etc.), as well as information from open or closed work orders 222. Based on this analysis, and depending on the nature of the request or query 706, the analysis component 212 generates and returns a natural language response 702 to the query 706 as part of guidance data 608 (e.g., an answer to a question about a work order 222 or the maintenance task prescribed by the work order 222, a recommendation regarding prioritization of maintenance tasks or work orders 22 in response to a request for such a recommendation, etc.). Example queries 706 for which the analysis component 212 can generate responses 702 can include, but are not limited to, questions regarding statuses of open work orders 222, questions regarding the plant facility's most urgent pending maintenance tasks, requests for guidance in performing a current step of a maintenance task, or other such queries 706. The work order management system 202 can support multiple languages, such that natural language requests or queries 706 can be submitted in substantially any language, and responses 702 will be returned in the same language as the submitted query 706.

In addition to referencing the information contained in the custom models 226, the analysis component 212 can also, as needed, prompt the generative AI model 408 for responses 506 that assist in generating suitable responses 702 in response to the user's natural language request or query 706. For example, in response to receipt of a natural language request or query 706, the analysis component 212 can determine whether a sufficiently accurate response 702 to the query 706 can be generated based on relevant information contained in the custom models 226 alone, or, alternatively, whether supplemental information from the generative AI model 408 is necessary to formulate a response 702 having a sufficiently high probability of satisfying the user's request or query 706. If supplemental information from the generative AI model 408 is deemed necessary, the analysis component 212 can formulate prompts 504 based on analysis of the request or query 706 and the knowledge encoded in any of the custom models 226. These prompts 504 are designed to obtain responses 506 from the generative AI model 408 that can be used to formulate accurate and cohesive responses 702 to the user's query 706.

For example, in the case of formulating responses 702 to a technician's question regarding a step in a maintenance task currently being performed, the analysis component 212 can aggregate information from the custom models 226 (or selected subsets of training data 502) determined to be relevant to the query (e.g., technical specifications for assets, information from open or closed work orders 222, learned behaviors of other technicians who have previously performed the maintenance task on similar types of assets, etc.) with language-specific compositional or syntax information obtained as responses 506 from the generative AI model 408 to formulate a natural language response 702 to the user's query 706.

In another example scenario, a technician who has a question about an existing work order 222 or its associated maintenance tasks can submit an initial natural language request or query 706 that broadly defines the information being requested. The initial query 706 may specify information that can assist the system 202 in identifying the nature of the information requested. The analysis component 212 can parse this initial request or query 706 to determine the type of information or service being requested, and refine and contextualize the initial query 706 in a manner expected to assist the custom models 226 and the generative AI model 408 to accurately generate a suitable response 702 to the user's question. If the analysis component 212 determines that additional information from the user would yield a response having a higher probability of satisfying the user's initial request, the analysis component 212 can formulate and render one or more query responses 702 that prompt the user for more refined information that will allow the analysis component 212 to more accurately respond to the user's request. Through iterations of such chat exchanges, the analysis component 212 can collaborate with the user in exploring potential response variations likely to satisfy the user's needs.

The analysis component 212 can use a range of approaches for processing a natural language request or query 706 submitted by the user, and for formulating prompts 504 to the generative AI model 408 designed to yield responses 506 that assist in responding to the user's request or query 706. According to an example approach, the analysis component 212 can access an archive of chat exchanges between the analysis component 212 and other users and identify chat sessions that were initiated by user queries having similarities to the initial query 706 submitted by the present user. Upon identifying these archived chat sessions, the analysis component 212 can analyze these past chat sessions to determine types of information that were ultimately generated as a result of these sessions (e.g., recommended maintenance workflows or instructions, visual aids for guiding a technician through a maintenance task, etc.), and either generate a natural language response 702 to the user's query 706 (or guidance data 608 that addresses the user's query 706) based on the outcomes of these past chat sessions and adapted to the user's initial request or query 706, or, if necessary, generate a prompt 504 for submission to the generative Al model 408 designed to obtain a response 506 comprising the necessary type of information.

Analysis of these archived chat sessions, as well as any other relevant customer-specific knowledge or expertise encoded in the custom models 226, can also assist the analysis component 212 in inferring the user's needs from an initially vaguely worded request or query 706, and to generate a response 702 addressing these needs. If supplemental information from the generative AI model 408 is deemed necessary to formulate a response 702 (or guidance data 608) having a sufficiently high probability of satisfying the user's request or query 706, the analysis component 212 can also formulate a prompt 504 designed to prompt the generative AI model 408 for at least a portion of the information inferred to be of interest to the user. This may include, for example, formulating the prompt 504 to request, from the generative AI model 408, information that may not have been specified in the user's request or query 706 but which the analysis component 212 ascertained to be necessary to accurately respond to the request or query 706. In this way, the analysis component 212 and its associated custom models 226 can actively frame a user's natural language request or query 706 in a manner that quickly and accurately leads the generative AI model 408 to the user's desired results.

In another example approach, the analysis component 212 can enhance the user's query 706 with additional information from the custom models 226 (or the training data 502 used to train the models 226) that contextualizes the user's request, and integrate this additional information with the user's query 706 to yield the prompt 504 submitted to the generative AI model 408. The types of additional contextual information added to the query 706 can depend on the nature of the query 706 and can include, but are not limited to, technical information about an industrial asset known to be relevant to the user's query 706, information about past maintenance tasks as obtained from closed work orders 222, information regarding past maintenance actions performed on the asset of interest, or other such information.

Returning to FIG. 6, some embodiments of the analysis component 212 can formulate guidance data 608 targeted to a technician based on the context and inferred level of expertise or training of the technician to whom the guidance is being provided. Contextual information that can be considered by the analysis component 212 can include, for example, the technician's current location within the plant facility, identities of industrial assets within the technician's vicinity, environmental conditions that may be relevant to the maintenance guidance provided by the system 202 (e.g., a current humidity level or temperature, a measured amount of particulate in the atmosphere near the asset on which maintenance is being performed, etc.), the current season or time of year, or other such contextual information. The analysis component 212 can infer the technician's level of relevant expertise based on knowledge of the technician's training or certifications (which may be obtained, for example, as part of MES data 416 or from another source of employee data), the technician's recorded maintenance history (e.g., knowledge of machines or assembly lines on which the technician has often performed maintenance), or other such information.

In some embodiments, the analysis component 212 can observe technicians' maintenance activities by monitoring and analyzing behavior data 612 and asset data 406 for multiple technicians 610 and assets, and based on this analysis learn optimal ways to solve maintenance problems. The analysis component 212 can use results of this learning to improve the guidance data 608 provided to assist with various types of maintenance tasks. To assist with this learning, as a technician 610 is carrying out a maintenance task, the user interface component 204 can prompt the technician 610 for an explanation or clarification of a maintenance step being performed. The technician 610 can provide this explanation as a response 606 to the system's prompt, submitted as a text-based response or as a spoken natural-language response (e.g., a response recorded and submitted by the technician's client device 604). The system 202 can use technician's response 606 to train the analysis component 212 to provide accurate guidance data 608 to other technicians performing a similar task, taking into account the technician's explanation of the step.

According to another training technique, an experienced technician can train the system 202 virtually by interacting with a virtual model of an industrial asset hosted by the system 202 to simulate the maintenance workflow for addressing a specific type of problem on that asset (e.g., performing an inspection routine, addressing an alarm condition, performing a preventative maintenance action such as changing a machine's oil, etc.). The analysis component 212 can observe the technician's interactions with the virtual model and record details of the observed workflow (e.g., in the custom models 226). The analysis component 212 can subsequently generate and deliver appropriate guidance data 608, generated based on this learned workflow, to technicians 610 who are performing the same maintenance task on the physical version of the asset. As part of this learning, the analysis component 212 can determine portions of a maintenance task that can be automated by AI in order to reduce the burden on technicians.

In some embodiments, the user interface component 204 can customize, over time, the user interface delivered to a given individual user for interacting with the system 202. For example, the analysis component 212 can learn a given technician's level of experience in performing a certain type of maintenance based on observation of the technician's behavior data 612, the number and types of work orders 222 that the technician has completed, information regarding the technician's training or certifications (which may be obtained, for example, as part of MES data 416), the technician's level of seniority, or other sources of information indicative of the technician's experience level. Based on the technician's inferred level of expertise, the analysis component 212 can customize the granularity and depth of the guidance data 608 in a manner commensurate with the technician's level of expertise. The user interface component 204 can also simplify a given technician's user interface based on the technician's observed usage patterns. This can include removing tabs that are rarely used by the technician, rendering dashboards that are typically used when performing a given maintenance task more prominently, aggregating frequently used features into a common view, or other such dynamic customizations.

To assist customers in developing best practices for maintaining their industrial assets, some embodiments of the analysis component 212 can monitor asset data 406 (see FIG. 4) over time and, based on this analysis, learn new key performance indicators (KPIs) for respective industrial assets. Based on these learned KPIs, the analysis component 212 can formulate recommendations for optimizing these KPIs and provide these recommendations as guidance data 608. In some cases, the analysis component 212 may determine KPIs for an asset that are relevant to the customer's defined production goals for the asset (e.g., maximizing product throughput, minimizing downtime, minimizing energy consumption or emissions, etc.).

To accommodate maintenance and business operations at locations with no connectivity to the cloud, some embodiments of the work order management system 202 can synchronize selected data to a technician's client device 604 based on the job site at which the technician 610 will be working, and a resident instance of the analysis component 212, as well as instances of custom models 226 and generative AI model 408, on the technician's device can use this data to provide maintenance guidance.

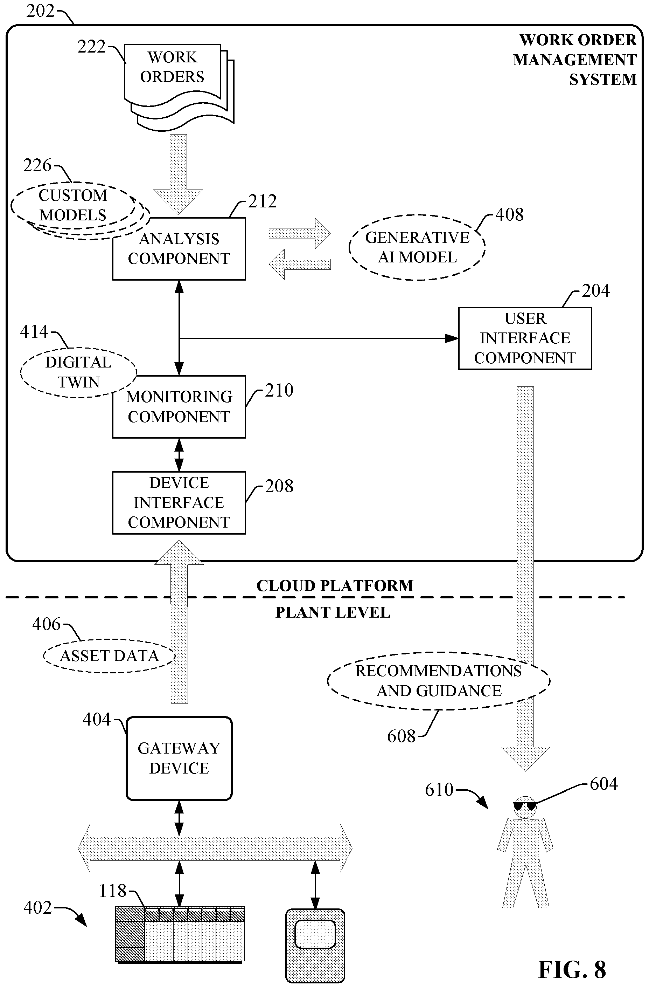

FIG. 8 is a diagram of an example architecture of work order management system 202 that incorporates a digital twin 414 to generate data for the analysis component 212 and associated custom models 226. In this example, a simulation-capable digital twin 414 representing one or more automation systems executing at a customer's facility is provisioned on the system 202. The monitoring component 210 can perform simulations of this digital twin 414 using real-time asset data 406 collected from the devices or assets that make up the automation systems, and generate maintenance and failure information for the automation systems based on results of this simulation. For example, the monitoring component 210 can execute a predictive simulation of the digital twin 414 based on inferred trends in the live asset data 406, and the analysis component 212 can predict a potential asset failure or performance degradation based on a result of this predictive simulation. In response to this determination, the analysis component 212 can formulate and deliver guidance data 608 notifying a technician of the predicted asset failure and providing maintenance recommendations for mitigating the predicted issue.

In some embodiments, the digital twin 414 can also encode technician knowledge of the customer's assets and maintenance procedures, which can be used by the analysis component 212 to generate maintenance recommendations and guidance. The outputs of the analysis component 212, generated based on execution of the digital twin 414, can be tied to the work order system to proactively generate work orders 222 for failure prevention tasks.

Embodiments of the work order management system 202 described herein can offer dynamic and intelligent maintenance guidance to technicians tasked with executing work orders, improving the effectiveness and efficiency of industrial asset maintenance. The system provides this dynamic guidance as an extension of work order management, and thus both tracks the statuses of work orders and proactively facilitates effective execution of the maintenance tasks prescribed by the work orders.

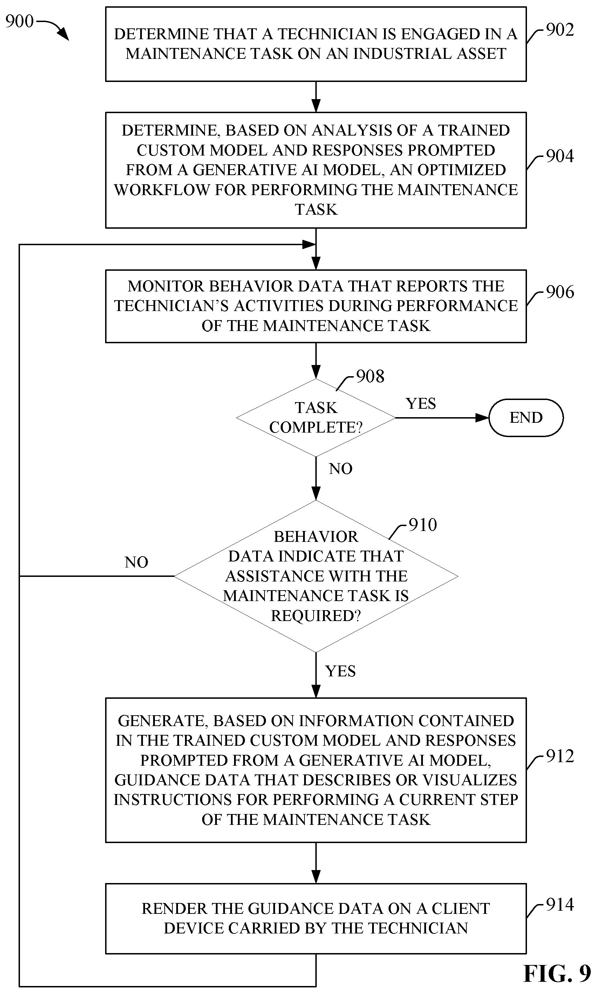

FIGs. 9-10b illustrate example methodologies in accordance with one or more embodiments of the subject application. While, for purposes of simplicity of explanation, the methodologies shown herein is shown and described as a series of acts, it is to be understood and appreciated that the subject innovation is not limited by the order of acts, as some acts may, in accordance therewith, occur in a different order and/or concurrently with other acts from that shown and described herein. For example, those skilled in the art will understand and appreciate that a methodology could alternatively be represented as a series of interrelated states or events, such as in a state diagram. Moreover, not all illustrated acts may be required to implement a methodology in accordance with the innovation. Furthermore, interaction diagram(s) may represent methodologies, or methods, in accordance with the subject disclosure when disparate entities enact disparate portions of the methodologies. Further yet, two or more of the disclosed example methods can be implemented in combination with each other, to accomplish one or more features or advantages described herein.

FIG. 9 illustrates an example methodology 900 for providing dynamic guidance for performing maintenance tasks on industrial assets. Initially, at 902, a determination is made that a technician is engaged in a maintenance task on an industrial asset within a customer's industrial facility. This determination can be made by a work order management system that maintains open and closed work orders for the customer, and that also supports AI-assisted generation of dynamic maintenance guidance in connection with performing the maintenance tasks prescribed by the work orders.

At 904, based on analysis of a trained custom model and responses prompted from a generative AI model, a determination is made as to an optimized workflow for performing the maintenance task currently being performed by the technician. The custom models can be trained using sets of training data representing a range of domain-specific industrial knowledge, and relevant to formulation of maintenance guidance and recommendations for planning and executing maintenance tasks. Example training data that can be used to train the custom models includes, but is not limited to, knowledge or technical specifications of different types of industrial assets, machines, and devices; information from past or closed work orders; monitored trends in asset operation (e.g., histories and frequencies of asset failure); information about technicians employed by the plant facility; financial data for the plant facility; help files; vendor knowledgebases; training materials; information defining industrial standards (e.g., global or vertical-specific safety standards, food and drug standards, design standards such as the ISA-88 standard, etc.); technical specifics of various types of industrial control applications (e.g., batch control processes, die casting, valve control, agitator control, etc.); knowledge of specific industrial verticals; knowledge of industrial best practices; control design rules; histories of past maintenance actions performed by technicians to successfully carry out a similar maintenance task on similar assets; and other such training data. As part of the analysis, the system can also generate and submit prompts to the generative AI model, and use the content of the generative AI model's responses in connection with formulating a suitable workflow determined to satisfy a success metric for performing the task.

At 906, behavior data that reports the technician's activities during performance of the maintenance task is monitored by the work order management system. The behavior data can be captured by the technician's client device or a separate monitoring device, and can include, but is not limited to, the technician's identity, location, manual activities being performed by the technician relative to the asset on which maintenance is being performed, words spoken by the technician, or other such information.

At 908, a determination is made as to whether the technician has completed the maintenance task. This determination can be made based on analysis of the behavior data monitored at step 906, an analysis of status data read from the sensors or devices that make up the asset, or based on a spoken or otherwise submitted indication from the technician that the task is complete. If the maintenance task is determined to be complete (YES at step 908), the methodology ends. Alternatively, if the task is not complete, the methodology proceeds to step 910, where a determination is made as to whether the behavior data monitored at step 906 indicates that assistance with the maintenance task is required. For example, the work order management system may determine that assistance is required if the behavior data indicates that the technician has deviated from the preferred or optimal workflow determined at step 904, if the behavior data indicates that the technician is spending an amount of time on a current step of the maintenance task in excess of an expected amount of time to complete the step, if the technician verbally requests assistance with the task, or in response to other such indications. If assistance is not deemed to be required (NO at step 910), the methodology returns to step 906 and monitoring continues. Steps 906-910 are repeated until the task is completed at step 908, or until the behavior data indicates that assistance with the task is required. If it is determined that assistance is required (YES at step 910), the methodology proceeds to step 912.

At 912, guidance data that describes or visualizes instructions for performing a current step of the maintenance task is generated based on information contained in the trained model and responses prompted from the generative AI model. At 914, this guidance data is rendered on a client device carried by the technician. The guidance data can comprise, for example, a natural language instruction for performing the task (presented in text or spoken audio format), a video or photograph that visually demonstrates how the task should be performed, relevant information obtained from a technical manual for the asset or device on which the task is being performed, AR graphics overlayed over the technician's field of view indicating where the technician's focus of attention should be for the current step, or other such information. The methodology then returns to step 906, and steps 906-914 are repeated until the maintenance task has been completed.

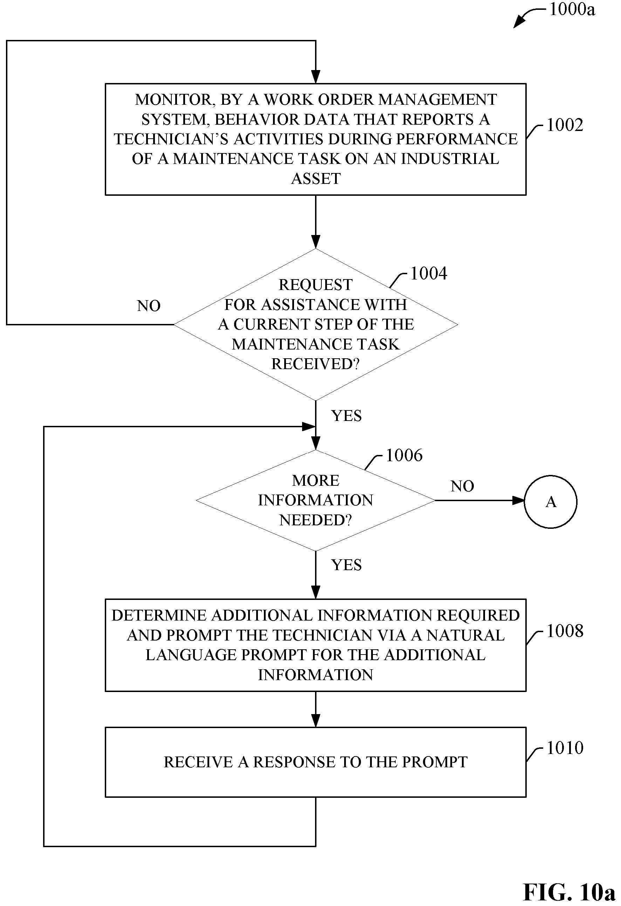

FIG. 10a illustrates a first part of an example methodology 1000a for providing chat-based assistance to a technician in connection with performing a maintenance task on an industrial asset. Initially, at 1002, behavior data that reports a technician's activities during performance of a maintenance task on an industrial asset is monitored by a work order management system (similar to step 906 of methodology 900). At 1004, a determination is made as to whether a request for assistance with a current step of the maintenance task is received from the technician. The request can be received as a natural language spoken or typed request for assistance submitted via a chatbot supported by the work order management system.

At 1006, a determination is made as to whether more information is needed from the user in order to accurately ascertain the nature of the technician's problem and generate a response having a sufficiently high probability of satisfying the technician's request. If additional information is required (YES at step 1006), the methodology proceeds to step 1008, where the work order management system determines the additional information required, and renders a natural language prompt designed to guide the technician toward providing the additional information. In determining the nature of the necessary additional information, the system can reference information encoded in custom models (e.g., information described above in connection with custom models 226) as well as responses prompted from a generative AI model. At 1010, a response to the prompt generated at step 1008 is received from the technician via the chat interface.

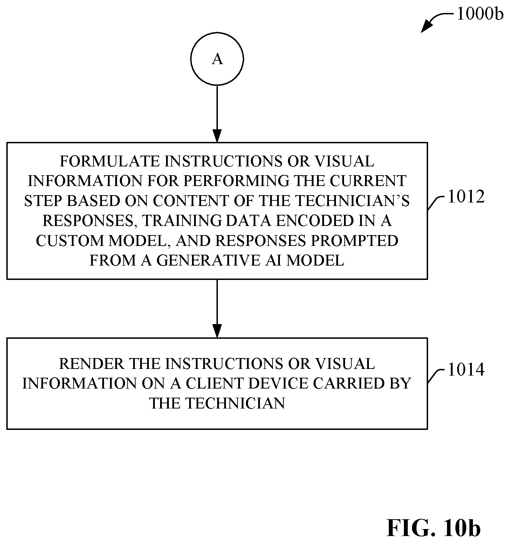

Steps 1006-1010 are repeated as a natural language dialog with the technician until sufficient information for generating accurate guidance or recommendations has been obtained. When no further information is required from the technician (NO at step 1006), the methodology proceeds to the second part 1000b illustrated in FIG. 10b. At 1012, the work order generation system formulates instructions or visual information for performing the current step of the maintenance task for which the technician is requesting assistance. This guidance information can be formulated based on content of the technician's original prompt and subsequent additional responses (received at steps 1004 and 1010), training data encoded in one or more custom models, and responses prompted from the generative AI model. At 1014, the instructions or visual information is rendered on a client device carried by the technician.

Embodiments, systems, and components described herein, as well as control systems and automation environments in which various aspects set forth in the subject specification can be carried out, can include computer or network components such as servers, clients, programmable logic controllers (PLCs), automation controllers, communications modules, mobile computers, on-board computers for mobile vehicles, wireless components, control components and so forth which are capable of interacting across a network. Computers and servers include one or more processors-electronic integrated circuits that perform logic operations employing electric signals-configured to execute instructions stored in media such as random access memory (RAM), read only memory (ROM), a hard drives, as well as removable memory devices, which can include memory sticks, memory cards, flash drives, external hard drives, and so on.

Similarly, the term PLC or automation controller as used herein can include functionality that can be shared across multiple components, systems, and/or networks. As an example, one or more PLCs or automation controllers can communicate and cooperate with various network devices across the network. This can include substantially any type of control, communications module, computer, Input/Output (I/O) device, sensor, actuator, and human machine interface (HMI) that communicate *via* the network, which includes control, automation, and/or public networks. The PLC or automation controller can also communicate to and control various other devices such as standard or safety-rated I/O modules including analog, digital, programmed/intelligent I/O modules, other programmable controllers, communications modules, sensors, actuators, output devices, and the like.

The network can include public networks such as the internet, intranets, and automation networks such as control and information protocol (CIP) networks including DeviceNet, ControlNet, safety networks, and Ethernet/IP. Other networks include Ethernet, DH/DH+, Remote I/O, Fieldbus, Modbus, Profibus, CAN, wireless networks, serial protocols, and so forth. In addition, the network devices can include various possibilities (hardware and/or software components). These include components such as switches with virtual local area network (VLAN) capability, LANs, WANs, proxies, gateways, routers, firewalls, virtual private network (VPN) devices, servers, clients, computers, configuration tools, monitoring tools, and/or other devices.

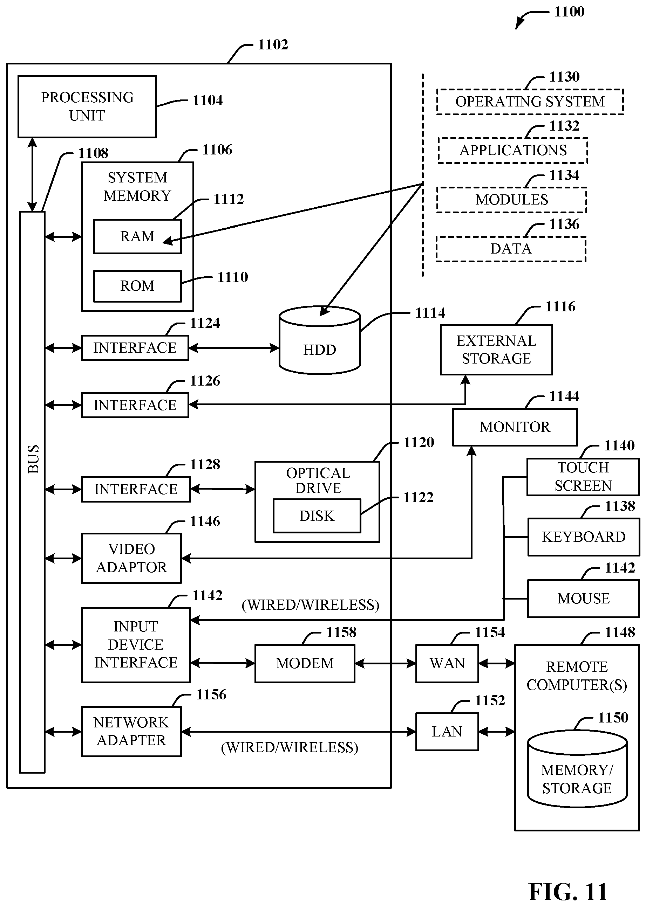

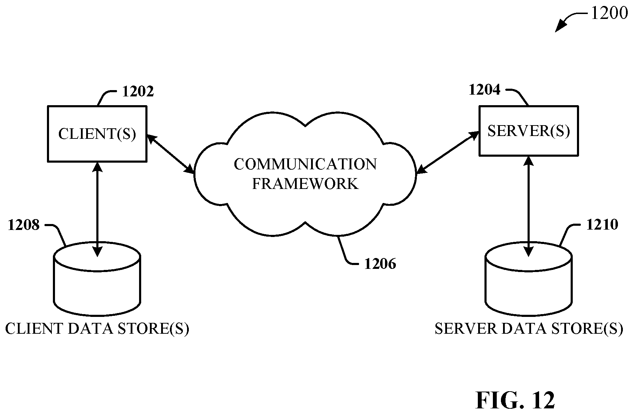

In order to provide a context for the various aspects of the disclosed subject matter, FIGs. 11 and 12 as well as the following discussion are intended to provide a brief, general description of a suitable environment in which the various aspects of the disclosed subject matter may be implemented. While the embodiments have been described above in the general context of computer-executable instructions that can run on one or more computers, those skilled in the art will recognize that the embodiments can be also implemented in combination with other program modules and/or as a combination of hardware and software.

Generally, program modules include routines, programs, components, data structures, etc., that perform particular tasks or implement particular abstract data types. Moreover, those skilled in the art will appreciate that the inventive methods can be practiced with other computer system configurations, including single-processor or multiprocessor computer systems, minicomputers, mainframe computers, Internet of Things (IoT) devices, distributed computing systems, as well as personal computers, hand-held computing devices, microprocessor-based or programmable consumer electronics, and the like, each of which can be operatively coupled to one or more associated devices.

The illustrated embodiments herein can be also practiced in distributed computing environments where certain tasks are performed by remote processing devices that are linked through a communications network. In a distributed computing environment, program modules can be located in both local and remote memory storage devices.

Computing devices typically include a variety of media, which can include computer-readable storage media, machine-readable storage media, and/or communications media, which two terms are used herein differently from one another as follows. Computer-readable storage media or machine-readable storage media can be any available storage media that can be accessed by the computer and includes both volatile and nonvolatile media, removable and non-removable media. By way of example, and not limitation, computer-readable storage media or machine-readable storage media can be implemented in connection with any method or technology for storage of information such as computer-readable or machine-readable instructions, program modules, structured data or unstructured data.

Computer-readable storage media can include, but are not limited to, random access memory (RAM), read only memory (ROM), electrically erasable programmable read only memory (EEPROM), flash memory or other memory technology, compact disk read only memory (CD-ROM), digital versatile disk (DVD), Blu-ray disc (BD) or other optical disk storage, magnetic cassettes, magnetic tape, magnetic disk storage or other magnetic storage devices, solid state drives or other solid state storage devices, or other tangible and/or non-transitory media which can be used to store desired information. In this regard, the terms "tangible" or "non-transitory" herein as applied to storage, memory or computer-readable media, are to be understood to exclude only propagating transitory signals per se as modifiers and do not relinquish rights to all standard storage, memory or computer-readable media that are not only propagating transitory signals per se.

Computer-readable storage media can be accessed by one or more local or remote computing devices, e.g., via access requests, queries or other data retrieval protocols, for a variety of operations with respect to the information stored by the medium.

Communications media typically embody computer-readable instructions, data structures, program modules or other structured or unstructured data in a data signal such as a modulated data signal, e.g., a carrier wave or other transport mechanism, and includes any information delivery or transport media. The term "modulated data signal" or signals refers to a signal that has one or more of its characteristics set or changed in such a manner as to encode information in one or more signals. By way of example, and not limitation, communication media include wired media, such as a wired network or direct-wired connection, and wireless media such as acoustic, RF, infrared and other wireless media.

With reference again to FIG. 11 the example environment 1100 for implementing various embodiments of the aspects described herein includes a computer 1102, the computer 1102 including a processing unit 1104, a system memory 1106 and a system bus 1108. The system bus 1108 couples system components including, but not limited to, the system memory 1106 to the processing unit 1104. The processing unit 1104 can be any of various commercially available processors. Dual microprocessors and other multi-processor architectures can also be employed as the processing unit 1104.

The system bus 1108 can be any of several types of bus structure that can further interconnect to a memory bus (with or without a memory controller), a peripheral bus, and a local bus using any of a variety of commercially available bus architectures. The system memory 1106 includes ROM 1110 and RAM 1112. A basic input/output system (BIOS) can be stored in a non-volatile memory such as ROM, erasable programmable read only memory (EPROM), EEPROM, which BIOS contains the basic routines that help to transfer information between elements within the computer 1102, such as during startup. The RAM 1112 can also include a highspeed RAM such as static RAM for caching data.

The computer 1102 further includes an internal hard disk drive (HDD) 1114 (e.g., EIDE, SATA), one or more external storage devices 1116 (e.g., a magnetic floppy disk drive (FDD) 1116, a memory stick or flash drive reader, a memory card reader, etc.) and an optical disk drive 1120 (e.g., which can read or write from a CD-ROM disc, a DVD, a BD, etc.). While the internal HDD 1114 is illustrated as located within the computer 1102, the internal HDD 1114 can also be configured for external use in a suitable chassis (not shown). Additionally, while not shown in environment 1100, a solid state drive (SSD) could be used in addition to, or in place of, an HDD 1114. The HDD 1114, external storage device(s) 1116 and optical disk drive 1120 can be connected to the system bus 1108 by an HDD interface 1124, an external storage interface 1126 and an optical drive interface 1128, respectively. The interface 1124 for external drive implementations can include at least one or both of Universal Serial Bus (USB) and Institute of Electrical and Electronics Engineers (IEEE) 1394 interface technologies. Other external drive connection technologies are within contemplation of the embodiments described herein.

The drives and their associated computer-readable storage media provide nonvolatile storage of data, data structures, computer-executable instructions, and so forth. For the computer 1102, the drives and storage media accommodate the storage of any data in a suitable digital format. Although the description of computer-readable storage media above refers to respective types of storage devices, it should be appreciated by those skilled in the art that other types of storage media which are readable by a computer, whether presently existing or developed in the future, could also be used in the example operating environment, and further, that any such storage media can contain computer-executable instructions for performing the methods described herein.

A number of program modules can be stored in the drives and RAM 1112, including an operating system 1130, one or more application programs 1132, other program modules 1134 and program data 1136. All or portions of the operating system, applications, modules, and/or data can also be cached in the RAM 1112. The systems and methods described herein can be implemented utilizing various commercially available operating systems or combinations of operating systems.

Computer 1102 can optionally comprise emulation technologies. For example, a hypervisor (not shown) or other intermediary can emulate a hardware environment for operating system 1130, and the emulated hardware can optionally be different from the hardware illustrated in FIG. 11. In such an embodiment, operating system 1130 can comprise one virtual machine (VM) of multiple VMs hosted at computer 1102. Furthermore, operating system 1130 can provide runtime environments, such as the Java runtime environment or the .NET framework, for application programs 1132. Runtime environments are consistent execution environments that allow application programs 1132 to run on any operating system that includes the runtime environment. Similarly, operating system 1130 can support containers, and application programs 1132 can be in the form of containers, which are lightweight, standalone, executable packages of software that include, e.g., code, runtime, system tools, system libraries and settings for an application.

Further, computer 1102 can be enable with a security module, such as a trusted processing module (TPM). For instance with a TPM, boot components hash next in time boot components, and wait for a match of results to secured values, before loading a next boot component. This process can take place at any layer in the code execution stack of computer 1102, e.g., applied at the application execution level or at the operating system (OS) kernel level, thereby enabling security at any level of code execution.

A user can enter commands and information into the computer 1102 through one or more wired/wireless input devices, e.g., a keyboard 1138, a touch screen 1140, and a pointing device, such as a mouse 1142. Other input devices (not shown) can include a microphone, an infrared (IR) remote control, a radio frequency (RF) remote control, or other remote control, a joystick, a virtual reality controller and/or virtual reality headset, a game pad, a stylus pen, an image input device, e.g., camera(s), a gesture sensor input device, a vision movement sensor input device, an emotion or facial detection device, a biometric input device, e.g., fingerprint or iris scanner, or the like. These and other input devices are often connected to the processing unit 1104 through an input device interface 1144 that can be coupled to the system bus 1108, but can be connected by other interfaces, such as a parallel port, an IEEE 1394 serial port, a game port, a USB port, an IR interface, a BLUETOOTH^{®} interface, etc.

A monitor 1144 or other type of display device can be also connected to the system bus 1108 via an interface, such as a video adapter 1146. In addition to the monitor 1144, a computer typically includes other peripheral output devices (not shown), such as speakers, printers, etc.

The computer 1102 can operate in a networked environment using logical connections via wired and/or wireless communications to one or more remote computers, such as a remote computer(s) 1148. The remote computer(s) 1148 can be a workstation, a server computer, a router, a personal computer, portable computer, microprocessor-based entertainment appliance, a peer device or other common network node, and typically includes many or all of the elements described relative to the computer 1102, although, for purposes of brevity, only a memory/storage device 1150 is illustrated. The logical connections depicted include wired/wireless connectivity to a local area network (LAN) 1152 and/or larger networks, e.g., a wide area network (WAN) 1154. Such LAN and WAN networking environments are commonplace in offices and companies, and facilitate enterprise-wide computer networks, such as intranets, all of which can connect to a global communications network, e.g., the Internet.

When used in a LAN networking environment, the computer 1102 can be connected to the local network 1152 through a wired and/or wireless communication network interface or adapter 1156. The adapter 1156 can facilitate wired or wireless communication to the LAN 1152, which can also include a wireless access point (AP) disposed thereon for communicating with the adapter 1156 in a wireless mode.

When used in a WAN networking environment, the computer 1102 can include a modem 1158 or can be connected to a communications server on the WAN 1154 via other means for establishing communications over the WAN 1154, such as by way of the Internet. The modem 1158, which can be internal or external and a wired or wireless device, can be connected to the system bus 1108 via the input device interface 1142. In a networked environment, program modules depicted relative to the computer 1102 or portions thereof, can be stored in the remote memory/storage device 1150. It will be appreciated that the network connections shown are example and other means of establishing a communications link between the computers can be used.

When used in either a LAN or WAN networking environment, the computer 1102 can access cloud storage systems or other network-based storage systems in addition to, or in place of, external storage devices 1116 as described above. Generally, a connection between the computer 1102 and a cloud storage system can be established over a LAN 1152 or WAN 1154 e.g., by the adapter 1156 or modem 1158, respectively. Upon connecting the computer 1102 to an associated cloud storage system, the external storage interface 1126 can, with the aid of the adapter 1156 and/or modem 1158, manage storage provided by the cloud storage system as it would other types of external storage. For instance, the external storage interface 1126 can be configured to provide access to cloud storage sources as if those sources were physically connected to the computer 1102.

The computer 1102 can be operable to communicate with any wireless devices or entities operatively disposed in wireless communication, e.g., a printer, scanner, desktop and/or portable computer, portable data assistant, communications satellite, any piece of equipment or location associated with a wirelessly detectable tag (e.g., a kiosk, news stand, store shelf, etc.), and telephone. This can include Wireless Fidelity (Wi-Fi) and BLUETOOTH^{®} wireless technologies. Thus, the communication can be a predefined structure as with a conventional network or simply an ad hoc communication between at least two devices.

FIG. 12 is a schematic block diagram of a sample computing environment 1200 with which the disclosed subject matter can interact. The sample computing environment 1200 includes one or more client(s) 1202. The client(s) 1202 can be hardware and/or software (e.g., threads, processes, computing devices). The sample computing environment 1200 also includes one or more server(s) 1704. The server(s) 1704 can also be hardware and/or software (e.g., threads, processes, computing devices). The servers 1204 can house threads to perform transformations by employing one or more embodiments as described herein, for example. One possible communication between a client 1702 and servers 1204 can be in the form of a data packet adapted to be transmitted between two or more computer processes. The sample computing environment 1700 includes a communication framework 1206 that can be employed to facilitate communications between the client(s) 1702 and the server(s) 1204. The client(s) 1202 are operably connected to one or more client data store(s) 1208 that can be employed to store information local to the client(s) 1202. Similarly, the server(s) 1704 are operably connected to one or more server data store(s) 1710 that can be employed to store information local to the servers 1204.

What has been described above includes examples of the subject innovation. It is, of course, not possible to describe every conceivable combination of components or methodologies for purposes of describing the disclosed subject matter, but one of ordinary skill in the art may recognize that many further combinations and permutations of the subject innovation are possible. Accordingly, the disclosed subject matter is intended to embrace all such alterations, modifications, and variations that fall within the spirit and scope of the appended claims.

In particular and in regard to the various functions performed by the above described components, devices, circuits, systems and the like, the terms (including a reference to a "means") used to describe such components are intended to correspond, unless otherwise indicated, to any component which performs the specified function of the described component (e.g., a functional equivalent), even though not structurally equivalent to the disclosed structure, which performs the function in the herein illustrated exemplary aspects of the disclosed subject matter. In this regard, it will also be recognized that the disclosed subject matter includes a system as well as a computer-readable medium having computer-executable instructions for performing the acts and/or events of the various methods of the disclosed subject matter.

In addition, while a particular feature of the disclosed subject matter may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising."

In this application, the word "exemplary" is used to mean serving as an example, instance, or illustration. Any aspect or design described herein as "exemplary" is not necessarily to be construed as preferred or advantageous over other aspects or designs. Rather, use of the word exemplary is intended to present concepts in a concrete fashion.

Various aspects or features described herein may be implemented as a method, apparatus, or article of manufacture using standard programming and/or engineering techniques. The term "article of manufacture" as used herein is intended to encompass a computer program accessible from any computer-readable device, carrier, or media. For example, computer readable media can include but are not limited to magnetic storage devices (e.g., hard disk, floppy disk, magnetic strips...), optical disks [e.g., compact disk (CD), digital versatile disk (DVD)...], smart cards, and flash memory devices (e.g., card, stick, key drive...).

## Claims

1. A system, comprising:
a memory that stores executable components and work order data defining work orders for maintenance tasks to be performed on industrial assets within an industrial facility; and
a processor, operatively coupled to the memory, that executes the executable components, the executable components comprising:
a user interface component configured to receive, from a client device via a natural language interface, a natural language input describing a request for assistance with a maintenance task, of the maintenance tasks, being performed on an industrial asset; and
an analysis component configured to, in response to receipt of the natural language input,
formulate guidance data describing instructions for performing the maintenance task based on analysis of the natural language input, industry-specific information stored in one or
more knowledgebases, and a response prompted from a generative artificial intelligence (AI) model,
wherein the user interface component is configured to render the guidance data on the client device via the natural language interface.

2. The system of claim 1, at least one of:
wherein the industry-specific information stored in the one or more knowledgebases comprises at least one of technical specifications of industrial assets and devices,
information in the work orders, monitored trends in operation of the industrial asset,
information about technicians working in the plant facility, help files, vendor knowledgebase information, training materials, information defining industrial standards, technical specifics of different types of industrial control applications, information regarding industrial verticals,
information regarding industrial best practices, or information regarding past maintenance actions that resulted in successful completion of past maintenance tasks;
wherein the industry-specific data comprises at least a globally applicable data collected from multiple industrial customers and proprietary data submitted by an industrial customer that owns the industrial facility; and
wherein the guidance data is at least one of a natural language description of the instructions, a reference video or photograph visualizing performance of the maintenance task, or an augmented reality presentation overlaid over a field of view that includes the industrial asset.

3. The system of claim 1 or 2, wherein
the analysis component is configured to, in response to the receipt of the natural language input, generate a prompt directed to the generative AI model and designed to obtain the response from the generative AI model, and
the response comprises information used by the analysis component to formulate the guidance data.

4. The system of claim 3, wherein the analysis component is configured to generate the prompt based on analysis of the natural language input and selected subsets of the industry-specific information determined to be relevant to the request described by the natural language input.

5. The system of one of claims 1 to 4, wherein the analysis component is configured to
determine a level of expertise of a user who submits the natural language input based on at least one of an identity of the user, certification data indicating a level of training of the user, or information from the work order data indicating the user's maintenance experience, and
formulate the guidance data based on the level of expertise of a user.

6. The system of one of claims 1 to 5, wherein
the guidance data is first guidance data,
the executable components further comprise a monitoring component configured to monitor behavior data that indicates a current location and activity of a user currently engaged in the maintenance task, and
the analysis component is further configured to, in response to a determination that the behavior data indicates a deviation in a learned workflow for performing the maintenance task, formulate second guidance data describing an instruction for performing a current step of the maintenance task.

7. The system of one of claims 1 to 6, further comprising a training component configured to train the one or more custom models based on a learned correlation between maintenance actions performed on the industrial asset and successful resolution of corresponding work orders.

8. A method, comprising:
storing, by a system comprising a processor, work orders for maintenance tasks performed within an industrial facility;
receiving, by the system, a natural language input from a client device, the natural language input describing a request for assistance with a maintenance task prescribed by a work order, of the work orders, and being performed on an industrial asset;
in response to the receiving, formulating, by the system, guidance data describing instructions for performing the maintenance task based on analysis of the natural language input, industry-specific data encoded in one or more custom models, and a response prompted from a generative artificial intelligence (AI) model; and
rendering, by the system, the guidance data on the client device.

9. The method of claim 8, further comprising training the one or more custom models with the industry-specific data, wherein the industry-specific data comprises at least one of technical specifications of industrial assets and devices, information in the work orders, monitored trends in operation of the industrial asset, information about technicians employed by the plant facility, help files, vendor knowledgebase information, training materials, information defining industrial standards, technical specifics of different types of industrial control applications, information regarding industrial verticals, information regarding industrial best practices, or information regarding past maintenance actions that resulted in successful completion of past maintenance tasks.

10. The method of claim 9, at least one of:
wherein the one or more custom models comprise at least a shared model trained with globally applicable training data collected from multiple industrial customers and a proprietary model trained using proprietary training data submitted by an industrial customer that owns the industrial facility;
the method further comprising:
receiving, by the system from the client device, feedback data indicating whether the guidance data was helpful in performing the maintenance task, and
retraining, by the system, the one or more trained models based on the feedback data; and
wherein the formulating of the guidance data comprises formulating at least one of a natural language description of the instructions, a reference video or photograph visualizing performance of the maintenance task, or an augmented reality presentation overlaid over a field of view that includes the industrial asset.

11. The method of claim 9 or 10, wherein the formulating comprises:
in response to the receiving of the natural language input, generating a prompt directed to the generative AI model and designed to obtain the response from the generative AI model, and
formulating the guidance data based on information contained in the response.

12. The method of claim 11, wherein the generating of the prompt comprises generating the prompt based on analysis of the natural language input and selected subsets of the industry-specific information determined to be relevant to the request described by the natural language input.

13. The method of one of claims 8 to 12, at least one of:
wherein
the guidance data is first guidance data,
the method further comprises:
monitoring, by the system, behavior data that indicates a current location and activity of a user currently engaged in the maintenance task, and
in response to a determination that the behavior data indicates a deviation in a learned workflow for performing the maintenance task, formulating second guidance data describing an instruction for performing a current step of the maintenance task; and
the method further comprising
learning, by the system, a correlation between maintenance actions performed on the industrial asset and successful resolution of corresponding work orders; and
training, by the system, the one or more custom models based on the correlation.

14. A non-transitory computer-readable medium having stored thereon instructions that, in response to execution, cause a system comprising a processor to perform operations, the operations comprising:
storing work orders for maintenance tasks performed within an industrial facility;
receiving a natural language input from a client device, the natural language input describing a request for assistance with a maintenance task prescribed by a work order,
of the work orders, and being performed on an industrial asset;
in response to the receiving, generating guidance data describing instructions for performing the maintenance task based on analysis of the natural language input, industry-specific data encoded in one or more custom models, and a response prompted from a generative artificial intelligence (AI) model; and
rendering the guidance data on the client device.

15. The non-transitory computer-readable medium of claim 14, wherein the formulating of the guidance data comprises formulating at least one of a natural language description of the instructions, a reference video or photograph visualizing performance of the maintenance task, or an augmented reality presentation overlaid over a field of view that includes the industrial asset.
